# EUROPÄISCHE PATENTSCHRIFT

(11) **EP 4 217 207 B1**
(45) Veröffentlichungstag und Bekanntmachung des Hinweises auf die Patenterteilung: **18.09.2024**
(21) Anmeldenummer: 21746642.4
(22) Anmeldetag: 22.07.2021
(51) Int. Cl.: B42D 25/425, B42D 25/44, B42D 25/324, B42D 25/351, B42D 25/373, B42D 25/29, G02B 5/18, G02B 5/22, G02B 27/42, G02B 30/00

(54) **VERFAHREN ZUM HERSTELLEN EINES OPTISCH VARIABLEN SICHERHEITSELEMENTS**
METHOD FOR PRODUCING AN OPTICALLY VARIABLE SECURITY ELEMENT
PROCÉDÉ DE FABRICATION D'UN ÉLÉMENT DE SÉCURITÉ OPTIQUEMENT VARIABLE

(30) Priorität: 28.09.2020 DE 102020005912
(43) Veröffentlichungstag der Anmeldung: 02.08.2023
(73) Patentinhaber: Giesecke+Devrient Currency Technology GmbH, 81677 München (DE)
(72) Erfinder: RAUCH, Andreas, 82441 Ohlstadt (DE); RAHM, Michael, 83646 Bad Tölz (DE); SATTLER, Tobias, 83607 Holzkirchen (DE); SCHERER, Kai Herrmann, 81539 München (DE); HOFFMÜLLER, Winfried, 83646 Bad Tölz (DE)
(74) Vertreter: Giesecke+Devrient IP
(86) Internationale Anmeldenummer: PCT/EP2021/025272
(87) Internationale Veröffentlichungsnummer: WO 2022/063424

(56) Entgegenhaltungen:
- EP-A1- 3 216 620
- EP-B1- 2 996 885
- WO-A1-2020/011391
- WO-A2-2020/126077

## Beschreibung

Die Erfindung betrifft ein Verfahren zum Herstellen eines optisch variablen Sicherheitselements.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes grafisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

Vor einiger Zeit wurden optisch variable Sicherheitselemente vorgeschlagen, die zwei, in unterschiedlichen Höhenstufen angeordnete und jeweils mit einer Farbbeschichtung versehene Reliefstrukturen aufweisen (siehe WO 2020/011390 A1, WO 2020/011391 A1 und WO 2020/011391 A2). Die Farbbeschichtung der höher liegenden Reliefstruktur ist dabei entweder als Raster strukturiert oder mit Aussparungen versehen, so dass bei der Betrachtung des Sicherheitselements unter bestimmten Betrachtungswinkeln in den Rasterzwischenräumen bzw. Aussparungen die Farbe der Farbbeschichtung der tiefer liegenden Reliefstruktur in Erscheinung tritt.

Ferner wird das folgende Vorgehen als bekannt vorausgesetzt. Eine Prägelackschicht wird nur bereichsweise auf einen Produktionsträger aufgebracht, die Prägelackschicht wird - beispielsweise mit einer Hologramm-Struktur - geprägt und vollflächig metallisiert. Zur Ausbildung von Negativzeichen neben dem Hologramm wird die Metallisierung mittels selektivem Aufbringen einer weiteren Schicht - vor oder nach dem Metallisieren - entsprechend nur stellenweise wieder entfernt. Das entstandene Sicherheitselement wird abschließend vom Produktionsträger abgezogen.

EP 3 216 620 A1 betrifft ein Sicherheitselement mit einer Vielzahl von reflektiven Facetten, die teilweise eine zufällige Orientierung haben und teilweise eine Orientierung für die Reflexion in einen Winkelbereich haben. WO 2020/126077 A2 beschreibt ein Verfahren zum Herstellen eines optisch variablen Sicherheitselements, bei dem eine Nichtmetall-Beschichtung selektiv von einer höher liegenden Reliefstruktur abgehoben wird. EP 2 996 885 B1 zeigt den Oberbegriff von Anspruch 1.

Ausgehend davon liegt der Erfindung die Aufgabe zugrunde, ein robustes Verfahren zur Herstellung optisch variabler Sicherheitselemente, insbesondere optisch variabler Sicherheitselemente mit zwei unabhängig voneinander wählbaren Farben der Reliefstrukturen, anzugeben.

Diese Aufgabe wird durch die Merkmale des unabhängigen Anspruchs gelöst. Weiterbildungen der Erfindung sind Gegenstand der abhängigen Ansprüche.

Gemäß der Erfindung wird in dem Verfahren zum Herstellen eines optisch variablen Sicherheitselements ein Produktionsträger bereitgestellt, dessen Flächenausdehnung eine darauf senkrecht stehende z-Achse definiert.

In einem Flächenbereich wird auf die Oberfläche des Produktionsträgers nur in Teilbereichen eine erste Prägelackschicht aufgebracht wird, so dass in dem Flächenbereich Lackbereiche mit einer Prägelackschicht und Freibereiche ohne Prägelackschicht entstehen. Die aufgebrachte erste Prägelackschicht wird auf einer ersten Höhenstufe mit einer ersten Prägung versehen.

Der Flächenbereich wird in den Freibereichen und in den Lackbereichen mit einer ersten Beschichtung versehen. Der Flächenbereich wird ferner in den Freibereichen und optional auch in den Lackbereichen mit einer weiteren Schicht versehen. In den Freibereichen wird die erste Beschichtung wieder entfernt. Der Produktionsträger wird erfindungsgemäß abgezogen.

Erfindungsgemäß ist die weitere Schicht eine zweite Prägelackschicht, welche mit einer zweiten Prägung - auf einer zweiten, von der ersten Höhenstufe in z-Richtung beabstandeten Höhenstufe - versehen wird, so dass eine Kombinationsstruktur mit den zwei Prägungen auf zwei Höhenstufen entsteht.

Die erste Prägelackschicht verhindert erfindungsgemäß ein Entfernen der ersten Beschichtung in den Lackbereichen bei oder nach dem Abziehen des Produktionsträgers von der Kombinationsstruktur. In den Freibereichen wird dagegen die erste Beschichtung bei oder nach dem Abziehen des Produktionsträgers entfernt. In den Freibereichen wird die erste Beschichtung vorzugsweise mit dem Produktionsträger abgezogen und somit bei dem Abziehen des Produktionsträgers entfernt. Die erste Beschichtung kann dazu eine höhere Adhäsion zum Produktionsträger aufweisen als die erste Prägelackschicht zum Produktionsträger. Die erste Beschichtung kann alternativ oder ergänzend eine höhere Adhäsion zum Produktionsträger aufweisen als die erste Beschichtung zu einer in der Kombinationsstruktur verbleibenden Zwischenschicht, welche insbesondere die zweite Prägelackschicht, eine Haftschicht oder eine dielektrische Schicht sein kann.

In den Lackbereichen verbleibt die erste Prägelackschicht bei dem Abziehen des Produktionsträgers in der Kombinationsstruktur, insbesondere da sie eine geringere Adhäsion zum Produktionsträger aufweist als die erste Beschichtung.

Das Entfernen der ersten Beschichtung in den Freibereichen kann alternativ oder ergänzend auch nach dem Abziehen des Produktionsträgers erfolgen. Die erste Beschichtung oder ein Rest der ersten Beschichtung, der nach dem Abziehen verblieben ist, wird dann durch Ätzen entfernt. Die in der Kombinationsstruktur verbleibende Zwischenschicht kann vorteilhaft eine höhere Resistenz gegen ein Ätzmittel aufweisen als die erste Beschichtung. Da sie in der Regel eine höhere Schichtdicke als die erste Beschichtung aufweist, ist jedoch ein ähnliche oder geringfügig kleinere Resistenz theoretisch ebenfalls verwendbar.

In den Lackbereichen verhindert die erste Prägelackschicht das Entfernen der ersten Beschichtung vorzugsweise auch nach dem Abziehen des Produktionsträgers. Sie kann optional eine höhere Resistenz gegen ein Ätzmittel aufweisen als die erste Beschichtung. Da die Prägelackschicht eine höhere Schichtdicke als die erste Beschichtung aufweist, ist jedoch ein ähnliche oder geringfügig kleinere Resistenz theoretisch ebenfalls verwendbar.

In den Lackbereichen liegt die erste Prägelackschicht direkt auf der Oberfläche des Produktionsträgers, während in den Freibereichen die erste Beschichtung direkt auf der Oberfläche des Produktionsträgers liegt. In den Lackbereichen liegt die erste Beschichtung mit einer Seite direkt auf der geprägten Oberfläche der ersten Prägelackschicht. Vorzugsweise liegt direkt auf der anderen Seite der ersten Beschichtung in den Freibereichen und optional auch in den Lackbereichen eine Zwischenschicht, die in der Kombinationsstruktur verbleibt. Die Zwischenschicht kann beispielsweise die zweite Prägelackschicht, eine Klebeschicht oder eine dielektrische Schicht sein.

Als vorteilhaft hat sich für das Entfernen bei dem Abziehen des Produktionsträger ein großer Adhäsionsunterschied erwiesen. Die genannten Adhäsionen unterscheiden sich bevorzugt zumindest um einen Faktor 2, weiter bevorzugt zumindest um einen Faktor 3 oder 5, insbesondere zumindest um einen Faktor 10. Insbesondere die Adhäsion der ersten Beschichtung zum Produktionsträger ist um mehr als den Faktor 2 (3, 5 oder 10) größer als die Adhäsion der ersten Prägelackschicht zum Produktionsträger. Die Adhäsion der ersten Beschichtung zum Produktionsträger ist um mehr als den Faktor 2 (3 oder 5) größer als die Adhäsion der ersten Beschichtung zur in der Kombinationsstruktur verbleibenden Zwischenschicht. Die Adhäsion der ersten Beschichtung zur Zwischenschicht ist in der Regel größer gewählt als die Adhäsion der Prägelackschicht zum Produktionsträger.

Die erste Beschichtung ist bevorzugt eine (erste) reflexionserhöhende Beschichtung ist, welche der ersten Prägung folgt; wobei vorzugsweise eine zweite reflexionserhöhende Beschichtung der zweiten Prägung folgt. Mit Vorteil folgen beide Seiten der ersten und/oder zweiten reflexionserhöhenden Beschichtung ihrer Prägung.

Insbesondere soll die Kombinationsstruktur eine erste und eine zweite unterschiedlich farbig wirkende, vorzugsweise reflektive und/oder transmissive, Reliefstruktur umfassen. Die erste bzw. zweite Reliefstruktur wird gebildet durch die erste respektive zweite Prägelackschicht, die erste respektive zweite reflexionserhöhende Schicht und eine optionale erste respektive zweite Farbschicht.

In besonders vorteilhaften Ausgestaltungen wird in einem Verfahrensschritt ein Produktträger der Kombinationsstruktur aufgebracht. Vorzugsweise wird zumindest die erste Prägelackschicht, insbesondere entweder nur die erste Prägelackschicht oder beide Prägelackschichten, zwischen dem Produktträger und dem Produktionsträger angeordnet. Der Produktträger kann ein Endproduktträger sein, der einen Teil des optisch variablen Sicherheitselements bildet. Alternativ ist der Produktträger ein Transferproduktträger ist, auf welchem das optisch variable Sicherheitselement mit seiner Kombinationsstruktur lösbar (also auch nur temporär) angeordnet ist. Das Sicherheitselement verbleibt temporär auf dem Transferproduktträger, beispielsweise bis zu einem Transfer von dem Transferproduktträger auf einen abzusichernden Gegenstand.

In einer ersten Ausgestaltung wird die zweite Prägelackschicht aufgebracht und erst auf dem Produktionsträger mit der zweiten Prägung versehen. In einer zweiten Ausgestaltung wird eine bereits geprägte zweite Prägelackschicht aufgebracht, insbesondere mittels einer Klebeschicht aufgebracht.

In der ersten Ausgestaltung kann die zweite Prägelackschicht mit ihrer ersten Oberfläche der zweiten Prägung folgen und mit der zweiten Oberfläche der ersten Prägung folgen. Wird dagegen zuvor eine - beispielsweise farbige - Zwischenschicht in den Lackbereichen (und den Freibereichen) aufgebracht, welche die erste Prägung ausgleicht, folgt die zweite Prägelackschicht mit der zweiten Oberfläche der ersten Prägung nicht. Zusätzlich oder alternativ kann die geprägte zweite Prägelackschicht mit der zweiten reflexionserhöhenden Beschichtung versehen werden. Zusätzlich oder alternativ kann ein Produktträger bereitgestellt werden und mittels einer Klebeschicht mit der, insbesondere beschichteten, geprägten zweiten Prägelackschicht verbunden werden.

In der zweiten Ausgestaltung kann zuvor die zweite Prägelackschicht auf dem Produktträger mit der zweiten Prägung versehen werden. Alternativ oder zusätzlich kann zuvor die geprägte zweite Prägelackschicht mit der zweiten reflexionserhöhenden Beschichtung versehen werden. Alternativ oder zusätzlich kann die Klebeschicht mit einer ersten Oberfläche der zweiten Prägung folgen und mit der zweiten Oberfläche der ersten Prägung folgen. Wird dagegen zuvor eine - beispielsweise farbige - Zwischenschicht in den Lackbereichen (und den Freibereichen) aufgebracht, welche die erste Prägung ausgleicht, folgt die Klebeschicht mit der zweiten Oberfläche der ersten Prägung nicht. Das Gleiche gilt, wenn die geprägte zweite Lackschicht und die Klebeschicht auf unterschiedlichen Seiten des Produktträgers angeordnet sind.

Ein Betrachter betrachtet das Sicherheitselement von einer gegebenen Betrachtungsseite. Die beiden Reliefstrukturen können sich hinsichtlich Effekttyp und/oder Betrachtungswinkelbereich unterscheiden. Die Wirkung der beiden Reliefstrukturen von der gegebenen Betrachtungsseite soll sich für den Betrachter farblich unterscheiden.

In ersten Varianten ist die erste, vorzugsweise reflexionserhöhende, Beschichtung und/oder die zweite reflexionserhöhende Beschichtung eine reflexionserhöhende Farbbeschichtung. Die reflexionserhöhende Farbbeschichtung kann gebildet sein durch genau eine Schicht, wie eine farbige Metallisierung oder durch eine farbgebende HRI-Schicht, oder durch einen Mehrschichtaufbau. Die reflexionserhöhende Farbbeschichtung kann nur reflektiv oder transmissiv und reflektiv farbwirksam sein. Beispielsweise kann sie durch einen farbgebenden (transmissiv und reflektiv wirksamen) HRI-Mehrschichtaufbau, durch einen farbkippenden Mehrschichtaufbau (in der Regel mit 3 Schichten aus Absorber, Dielektrikum und Reflektor, beispielsweise mit vollflächigem oder partiellem Reflektor) oder einen farbfilternden transmissiv und reflektiv wirksamen Mehrschichtaufbau (in der Regel mit 3 Schichten aus Absorber, Dielektrikum und Absorber). Bevorzugt wird sie gebildet durch eine reflexionserhöhende Teilschicht, die mit einer Teilschicht lasierender und/ oder lumineszierender Farbe versehen ist.

In zweiten Varianten wirkt die erste Beschichtung, welche eine reflexionserhöhende Beschichtung ist, und/oder die zweite reflexionserhöhende Beschichtung, durch eine Unterstruktur ihrer Prägung, insbesondere eine Subwellenlängenstruktur, Interferenzstruktur (beispielsweise als Nanostruktur mit binärer Oberfläche) oder Diffraktions-Struktur, farbig reflektierend.

In dritten Varianten ist für die erste Beschichtung, welche eine reflexionserhöhende Beschichtung ist, und/oder für die zweite reflexionserhöhende Beschichtung genau eine erste respektive zweite lasierende Farbschicht vorgesehen oder ein erster respektive zweiter farbgebender Mehrschicht-Teilaufbau (wie Dielektrikum und Reflektor/Absorber) vorgesehen, der nur zusammen mit der reflexionserhöhenden Beschichtung, reflektiv und/oder transmissiv, farbig wirkt. Insbesondere eine erste bzw. zweite lasierende Farbschicht kann auch als unstrukturierte Farbschicht ausgebildet sein, die also mit keiner ihrer Seiten einer der beiden Prägungen folgt.

Bevorzugt wird für beide Prägungen der Kombinationsstruktur, die gleiche Variante verwendet. Alternativ können in einem Sicherheitselement zwei unterschiedliche der drei genannten Varianten verwendet werden.

Die erste Beschichtung und/oder für die zweite reflexionserhöhende Beschichtung ist besonders bevorzugt eine aufgedampfte Schicht, insbesondere eine Metallschicht oder eine HRI-Schicht.

Die erste und/oder zweite Prägestruktur wird mit Vorteil in einer transparenten oder lasierend eingefärbten Prägelackschicht abgeformt. Ist eine Prägelackschicht zwischen Betrachter und der ersten und/oder zweiten reflexionserhöhenden Beschichtung angeordnet, kann die Färbung der Prägelackschicht die Farbwirkung bestimmen oder eine Farbwirkung der ersten respektive zweiten reflexionserhöhenden Beschichtung modifizieren. Bei Verwendung transparenter, also unfarbiger, Prägelackschichten ist die Farbwirkung der Prägestrukturen durch die jeweilige Farbbeschichtung bzw. Farbschicht gegeben. Durch den Einsatz lasierend eingefärbter Prägelackschichten kann die Farbwirkung der Farbbeschichtung modifiziert werden, so dass beispielsweise trotz Verwendung derselben Metallisierung, beispielsweise einer Al-Metallisierung, unterschiedliche Farbwirkungen der Prägelackschichten erzeugt werden können.

In einer vorteilhaften Ausgestaltung werden die Lackbereiche und Freibereiche zumindest in einem Teilbereich des Flächenbereichs als regelmäßiges oder unregelmäßiges Raster mit Rasterelementen und Rasterzwischenräumen ausgebildet, wobei die Abmessungen der Rasterelemente und/oder die Abmessungen der Rasterzwischenräume in einer oder beiden lateralen Richtungen unterhalb von 140 µm, vorzugsweise zwischen 20 µm und 100 µm, insbesondere zwischen 20 µm und 60 µm liegen. Der Betrachter nimmt das Raster nicht wahr. Die Abmessungen der Rasterelemente bzw. Rasterzwischenräume sind insbesondere so gewählt, dass sie unterhalb des Auflösungsvermögens des menschlichen Auges liegen.

In den durch die Lackbereiche und Freibereiche gebildeten Rasterbereichen zeigt das Sicherheitselement vorteilhaft beim Kippen oder einer entsprechenden Änderung der Betrachtungsrichtung ein Erscheinungsbild, das plötzlich von einem ersten zu einem zweiten Erscheinungsbild (bzw. beim Zurückkippen vom zweiten zum ersten Erscheinungsbild) springt. Dabei erfolgt gleichzeitig und ohne Zwischen- oder Übergangsstufe eine Änderung des dargestellten Motivs (beispielsweise Wertzahl oder Wappen) und der Farbe (beispielsweise Gelb bzw. Blau). Ein solches übergangslos zwischen zwei unterschiedlichen Motiven mit zwei unterschiedlichen Farben wechselndes Erscheinungsbild wird in dieser Beschreibung als binärer Farb- und Motivwechsel bezeichnet. Ein binärer Farb-, Motiv- und Effektwechsel ist möglich, insbesondere da zusätzlich auch ein optisch variabler Effekt der Motive (flach/dreidimensional und/oder in Substratebene liegend/über Substratebene schwebend/ ünter Substratebene schwebend und/oder ortsfest/bewegt ...) sich unterscheiden kann.

Das durch die Lackbereiche und Freibereiche gebildete Raster wird vorteilhaft mit einer konstanten Flächendeckung durch die Rasterelemente ausgebildet, welche zweckmäßig zwischen 30% und 70%, vorzugsweise zwischen 40% und 60%, insbesondere bei etwa 50% liegt.

Alternativ oder zusätzlich ist vorgesehen, dass die Lackbereiche und Freibereiche zumindest in einem Teilbereich des Flächenbereichs als Effektbereich ausgebildet werden, in dem die Lackbereiche und/oder die Freibereiche laterale Abmessungen von mehr als 140 µm aufweisen. Der Effektbereich ist groß genug, um vom Betrachter separat wahrgenommen zu werden.

In diesen Effektbereichen zeigt das Sicherheitselement vorzugsweise zwei unterschiedliche Effekte (beispielsweise ein dreidimensionales Motiv und einen Bewegungseffekt wie einen laufenden Balken), die in zwei unterschiedlichen Farben in Erscheinung treten. Die Bereiche unterschiedlichen Farbeindrucks und unterschiedlicher Effekte sind dabei exakt zueinander gepassert, was nachfolgend auch als Farbe-zu-Effekt-Passerung bezeichnet wird.

Mit Vorteil ist zumindest ein Lackbereich und/oder zumindest ein Freibereich mit lateralen Abmessungen von mehr als 250 µm, vorzugsweise von mehr als 500 µm und insbesondere von mehr als 1 mm ausgebildet.

Die Prägestrukturen werden vorteilhaft durch Mikrospiegelanordnungen mit gerichteten Mikrospiegeln gebildet. Die Mikrospiegel sind dabei insbesondere durch nicht-diffraktiv wirkende Spiegel gebildet und erzeugen keine Farbaufspaltung. Vorzugsweise können dabei plane Spiegel, Hohlspiegel und/oder fresnelartige Spiegel zum Einsatz kommen. Die lateralen Abmessungen der Mikrospiegel liegen dabei zweckmäßig unterhalb von 50 µm, vorteilhaft unterhalb von 20 µm, bevorzugt bei etwa 10 µm, also zwischen 7 µm und 13 µm. Auf der anderen Seite liegen die lateralen Abmessungen der Mikrospiegel aber auch oberhalb von 2 µm, insbesondere oberhalb von 3 µm oder sogar oberhalb von 5 µm. Die Ganghöhe der Mikrospiegel beträgt vorzugsweise weniger als 10 µm, bevorzugt weniger als 5 µm.

Grundsätzlich können anstelle von Mikrospiegeln auch andere geprägte Reliefstrukturen, insbesondere Fresnellinsen, Hohlspiegel, Hologrammstrukturen, Nanostrukturen oder diffraktive geblazte Gitter eingesetzt werden. Besonders vorteilhaft können hier achromatische Beugungsgitter, sogenannte Mattstrukturen verwendet werden, die im Wesentlichen weißes Licht reflektieren und somit die Farbwirkung der Beschichtung oder eventueller Farbschichten nicht durch die Erzeugung von Beugungsfarben stören. Zur Erzeugung bunter Farben in Transmission und/ oder Reflexion können die Reliefstrukturen auch Subwellenlängenstrukturen, insbesondere Subwellenlängengitter, aufweisen, die in Kombination mit der jeweiligen reflexionserhöhenden Beschichtung deren Farbe bestimmen oder zumindest mitbestimmen.

In einer vorteilhaften Ausgestaltung bedecken die erste und zweite Farbbeschichtung vollständig die jeweilige Prägestruktur. Liegt eine Prägestruktur, wie etwa die erste Prägestruktur, nur in Teilbereichen des Flächenbereichs vor, bezeichnet eine vollständige Bedeckung der Prägestruktur die vollständige Bedeckung derjenigen Teilbereiche, in denen die Prägestruktur in dem Flächenbereich vorliegt.

Alternativ können durch Aussparungen in der ersten und/oder zweiten reflexionserhöhenden Beschichtung auch Negativkennzeichen in dem Sicherheitselement vorgesehen sein, die beispielsweise Text, Symbole oder Wertzahlen bilden.

In den Lackbereichen und/ oder in den Freibereichen des reflektiven Flächenbereiches können transmissive Negativkennzeichen gebildet werden, die beispielsweise Text, Symbole oder Wertzahlen bilden. Dies ist insbesondere möglich indem in den Lackbereichen deckungsgleiche Aussparungen in der ersten und zweiten reflexionserhöhenden Beschichtung erzeugt werden und/ oder in den Freibereichen Aussparungen in der zweiten reflexionserhöhenden Beschichtung erzeugt werden.

Negativkennzeichen können in den Rasterbereichen vorgesehen sein, die durch die genannten Lackbereiche und Freibereiche gebildet sind. Sie erscheinen dort allerdings in der Regel visuell weniger attraktiv, da die Strichstärke der Negativkennzeichen meist größer ist als die Rasterung der ersten Prägelackschicht, so dass der Betrachter möglicherweise das Druckraster der Negativkennzeichen sehen kann.

Dagegen können Negativkennzeichen wegen der größeren Abmessungen der Lackbereiche und Freibereiche sehr gut in die Effektbereiche mit Farbe-zu-Effekt-Passerung integriert werden, wobei folgende Varianten bevorzugt sind:
a) Die Negativkennzeichen können im Überlappungsbereich der beiden Prägestrukturen, also in den genannten Lackbereichen des Flächenbereichs, erzeugt werden. In diesem Fall stellt das Halten des Registers eine besondere Herausforderung dar, da die beiden Reliefstrukturen eine gewisse Registertoleranz zueinander haben und auch die Demetallisierung eine gewisse Registertoleranz aufweist. Da in dieser Variante beide reflexionserhöhenden Beschichtungen teilweise entfernt werden müssen, addieren sich die Registertoleranzen.

Transparente farblose Negativkennzeichen erfordern dabei, dass beide Prägelackschichten (erste Verfahrensvariante) bzw. die erste Prägelackschicht und der Kaschierkleber (zweite Verfahrensvariante) farblos ausgebildet sind. Ist eine oder sind beide Prägelackschichten bzw. der Kaschierkleber lasierend einfärbt, so ergeben sich farbige Negativkennzeichen mit der Farbwirkung der farbigen Schichten oder der subtraktiven Farbwirkung beider farbiger Schichten.
b) Die Negativkennzeichen können in den Freibereichen des Flächenbereichs erzeugt werden, in denen nur die zweite Prägelackschicht vorliegt. In diesem Fall ist das Halten des Registers einfacher, da nur die reflexionserhöhende Beschichtung der zweiten Reliefstruktur entfernt/ demetallisiert werden muss.

Transparente farblose Negativkennzeichen erfordern dabei, dass die Farbwirkung der zweiten Prägestruktur durch eine Metallschicht erzeugt ist, die in den Aussparungen entfernt ist. Ist die zweite Prägelackschicht (erste Verfahrensvariante) oder der Kaschierkleber (zweite Verfahrensvariante) lasierend eingefärbt, so ergeben sich farbige Negativkennzeichen.

In allen Verfahrensvarianten ist bevorzugt, dass beide Prägestrukturen auf derselben Seite des Produktionsträgers bzw. des Endproduktträgers aufgebaut werde, um möglichst wenige Arbeitsgänge bei der Herstellung des Sicherheitselements zu haben und zuverlässig die gewünschten visuellen Effekte zu erzielen.

Der beschriebene reflektive Flächenbereich des Sicherheitselements kann mit anderen Sicherheitsmerkmalen kombiniert werden, beispielsweise mit Hologrammen, insbesondere Echtfarbenhologrammen, mit Subwellenlängengittern oder anderen Subwellenlängenstrukturen, mit Mikrospiegelanordnungen ohne diffraktive Gitter, oder auch mit Sicherheitsmerkmalen, die auf speziellen Materialeigenschaften, wie elektrischer Leitfähigkeit, magnetischen Eigenschaften, Lumineszenz, Fluoreszenz oder dergleichen basieren, wie sie jeweils aus dem Stand der Technik bekannt sind.

Das optisch variable Sicherheitselement kann mit weiteren Schichten, wie etwa einer Schutz-, Abdeck- oder einer zusätzliche Funktionsschicht, einer Primerschicht oder einer Heißsiegellackschicht versehen werden. Diese sind für die vorliegende Erfindung allerdings nicht wesentlich und sind daher nicht näher beschrieben.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäß hergestellten optisch variablen Sicherheitselement,
- Fig. 2: ein erfindungsgemäß hergestelltes Sicherheitselement im Querschnitt,
- Fig. 3: in (a) bis (c) Zwischenschritte bei der Herstellung der Primärstruktur eines Sicherheitselements,
- Fig. 4: in (a) bis (e) Zwischenschritte bei der Ergänzung der Primärstruktur der Fig. 3 mit einer Sekundärstruktur nach einer ersten erfindungsgemäßen Verfahrensvariante,
- Fig. 5: in (a) bis (d) Zwischenschritte bei der Ergänzung der Primärstruktur der Fig. 3 mit einer Sekundärstruktur nach einer zweiten erfindungsgemäßen Verfahrensvariante,
- Fig. 6: ein nach der ersten Verfahrensvariante hergestelltes Sicherheitselement mit zusätzlich eingebrachten Negativkennzeichen, und
- Fig. 7: ein nach der zweiten Verfahrensvariante hergestelltes Sicherheitselement mit zusätzlich eingebrachten Negativkennzeichen.

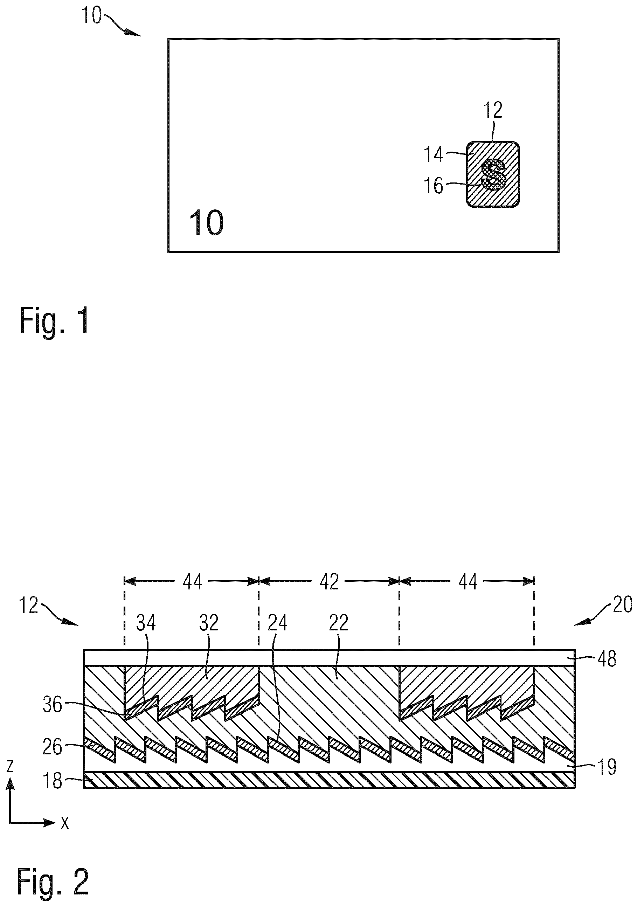

Die Erfindung wird nun am Beispiel von Sicherheitselementen für Banknoten erläutert. Figur 1 zeigt dazu eine schematische Darstellung einer Banknote 10 mit einem erfindungsgemäß hergestellten optisch variablen Sicherheitselement 12 in Form eines aufgeklebten Transferelements. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patches mit oder ohne eigene Trägerschicht) beispielsweise auch Sicherheitsfäden oder Sicherheitsstreifen in Betracht.

Das Sicherheitselement 12 ist selbst sehr flach ausgebildet, vermittelt dem Betrachter aber dennoch den dreidimensionalen Eindruck eines sich scheinbar aus der Ebene der Banknote 10 herauswölbenden Motivs 14, das mit einer ersten Farbe erscheint. In der Praxis kann das Motiv 14 beispielsweise eine Wertzahl, ein Portrait oder ein anderes grafisches Motiv darstellen. Innerhalb des Motivs 14 ist in einem Teilbereich 16 ein Bewegungseffekt in einer zweiten Farbe sichtbar. Beispielsweise kann sich ein heller Balken beim Kippen der Banknote 10 entlang des geschwungenen Teilbereichs 16 vor und zurück bewegen und einen sogenannten Rolling-Bar-Effekt erzeugen. Die Bereiche unterschiedlicher Farbe (erste und zweite Farbe) und unterschiedlicher Effekte (dreidimensionales Motiv bzw. laufender Balken) sind dabei exakt zueinander gepassert. Diese Passerung wird nachfolgend auch als Farbe-zu-Effekt-Passerung bezeichnet.

Zur näheren Erläuterung enthält das Sicherheitselement 12 mit Bezug auf den Querschnitt der Fig. 2 einen flächigen Endproduktträger 18, dessen Flächenausdehnung eine x-y-Ebene und eine darauf senkrecht stehende z-Achse definiert. Auf dem Endproduktträger 18 ist ein mehrfarbiger reflektiver Flächenbereich 20 angeordnet, der zwei Prägestrukturbereiche 24, 34 enthält, die in z-Richtung in zwei bestimmten, unterschiedlichen Höhenstufen bezogen auf den flächigen Träger 18 angeordnet sind. Die unterschiedlichen Höhenstufen der Prägestrukturbereiche 24, 34 sind im Ausführungsbeispiel durch die unterschiedlichen Höhen der Grundflächen der Mikrospiegelanordnungen 24, 34 über dem Träger 18 definiert.

Die beiden Prägestrukturbereiche stellen im Ausführungsbeispiel jeweils Mikrospiegelprägungen bzw. Mikrospiegelanordnungen 24, 34 dar, welche aus einer Vielzahl von gegen die x-y-Ebene geneigten Mikrospiegeln gebildet sind. Die lokalen Neigungswinkel der Mikrospiegel sind dabei gerade so gewählt, dass die Reliefstruktur der Mikrospiegelanordnungen 24, 34 zusammen mit der jeweiligen Farbbeschichtung ein gewünschtes optisches Erscheinungsbild erzeugen, wie etwa den herausgewölbten dreidimensionalen Eindruck des Motivs 14 oder den Rolling-Bar-Effekt des Teilbereichs 16.

Um das gewünschte Erscheinungsbild des Sicherheitselements 12 mit zwei unabhängig wählbaren Farben zu erzeugen, sind die Mikrospiegelanordnungen 24, 34 jeweils mit einer reflexionserhöhenden Farbbeschichtung 26, 36 versehen, die für einen Betrachter den unterschiedlichen Farbeindruck der Mikrospiegelanordnungen in Reflexion erzeugen. Im gezeigten Ausführungsbeispiel sind die Mikrospiegelanordnungen 24, 34 mit verschiedenfarbig reflektierenden Metallen 26, 36 beschichtet, beispielsweise mit Aluminium und Kupfer. Der unterschiedliche Farbeindruck kann aber auch auf andere Weise, beispielsweise durch Kombination einer im gesamten sichtbaren Spektralbereich im Wesentlichen gleichmäßig reflektierende Metallisierung (beispielsweise aus Aluminium oder Silber) mit einer lasierenden Farbe gebildet sein, wie an anderer Stelle genauer erläutert.

Die Mikrospiegelanordnungen 24, 34 stellen jeweils Prägestrukturen dar, die in eine zuvor aufgebrachte Prägelackschicht 22, 32 eingeprägt sind. Je nach den gewünschten Farbwirkungen können die Prägelackschichten 22, 32 farblos transparent oder eingefärbt sein.

Das Sicherheitselement 12 ist für eine Betrachtung von oben (bzw. in Reflexion), vorliegend also von der dem Träger 18 abgewandten Seite her ausgelegt. Die weiter vom Betrachter entfernte Mikrospiegelanordnung 24 wird daher auch als die tiefer liegende Mikrospiegelanordnung und die näher am Betrachter liegende Mikrospiegelanordnung 34 als die höher liegende Mikrospiegelanordnung bezeichnet.

Die beiden Mikrospiegelanordnungen 24, 34 des Ausführungsbeispiels sind übereinander angeordnet, wobei die höher liegende Mikrospiegelanordnung 34 zumindest eine großflächige Aussparung 42 aufweist, beispielsweise in Form eines 5 mm breiten und 2 cm langen gekrümmten Streifens (Fig. 1). Im Bereich der Aussparung 42 blickt der Betrachter auf die tiefer liegende Mikrospiegelanordnung 24 mit ihrer Farbbeschichtung 26, während der visuelle Eindruck des Flächenbereichs 20 im Bereich 44 außerhalb der Aussparung 42 von der höher liegenden Mikrospiegelanordnung 34 mit der Farbbeschichtung 36 bestimmt wird.

Bei der Betrachtung des Sicherheitselements 12 in Reflexion nimmt der Betrachter in den Bereichen 44 außerhalb der Aussparung 42 das von der Mikrospiegelanordnung 34 erzeugte Motiv 14 mit einer ersten Farbe wahr, die durch die Farbe der Farbbeschichtung 36 und die Farbe oder Farblosigkeit der Prägelackschicht 32 bestimmt wird.

Innerhalb der Aussparung 42 tritt ein Bewegungseffekt in Erscheinung, bei dem beispielsweise beim Kippen der Banknote 10 ein heller Balken einer zweiten Farbe innerhalb des geschwungenen Teilbereichs 16 (Fig. 1) vor und zurück zu laufen scheint. Die zweite Farbe ist durch die Farbe der Farbbeschichtung 26 und die Farbe oder Farblosigkeit der Prägelackschicht 22 bestimmt. Der Höhenunterschied der beiden Mikrospiegelanordnungen 24, 34 liegt im Bereich von einigen Mikrometern oder einigen zehn Mikrometern und ist für den Betrachter daher nicht wahrnehmbar. Die beiden verschiedenfarbigen Motive und die unterschiedlichen Effekte 14, 16 scheinen daher für den Betrachter in exaktem Passer ineinander angeordnet zu sein.

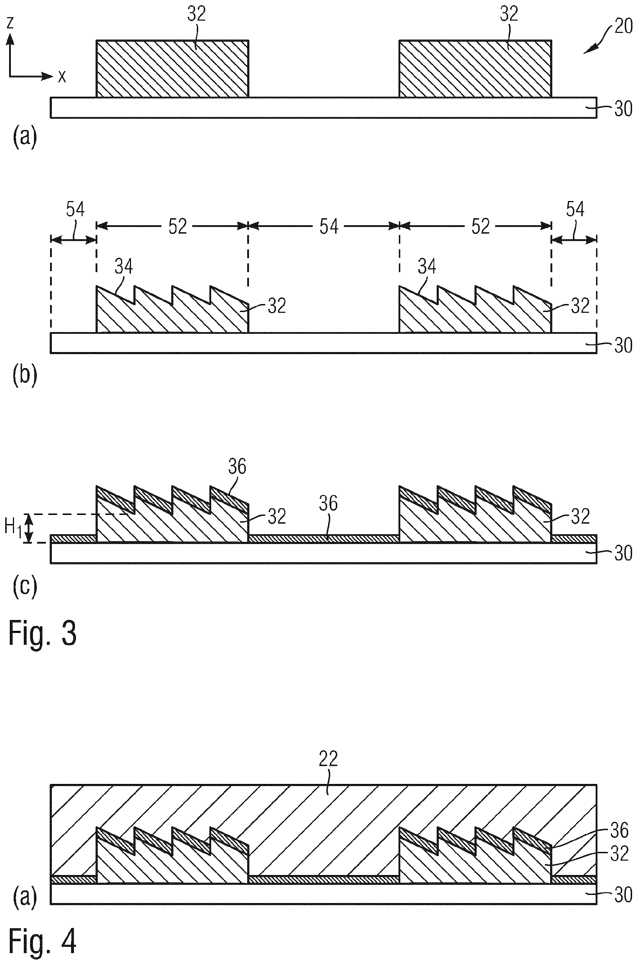

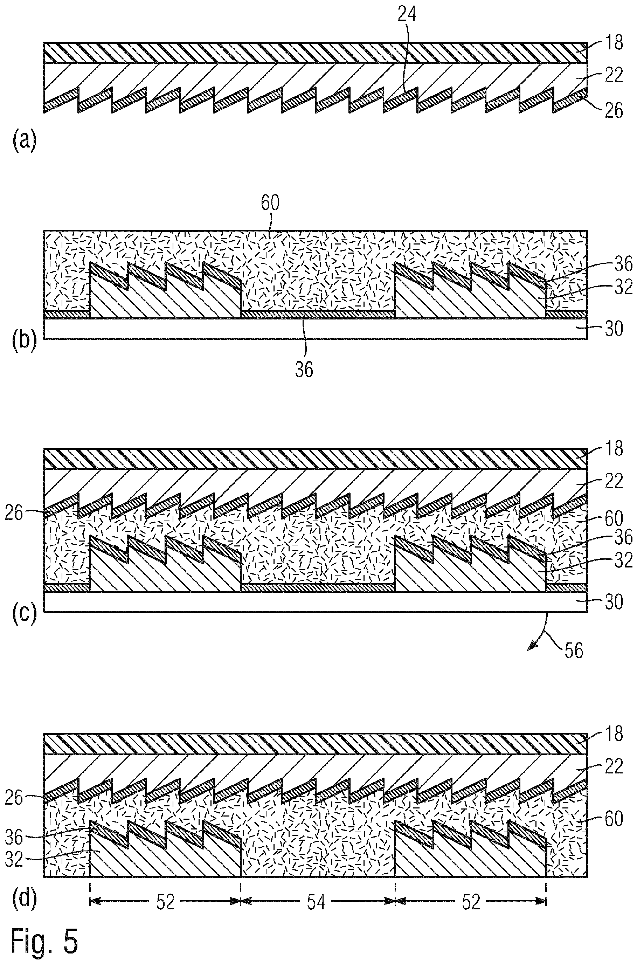

Die erfindungsgemäße Herstellung solcher Sicherheitselemente wird nun mit Bezug auf die Figuren 3 bis 5 näher beschrieben, wobei Zwischenschritte einer ersten vorteilhaften Verfahrensführung mit Bezug auf die Fig. 3(a)-(c) und Fig. 4(a)-(e) und Zwischenschritte einer zweiten vorteilhaften Verfahrensführung mit Bezug auf die Fig. 3(a)-(c) und Fig. 5(a)-(d) beschrieben werden.

Zunächst wird mit Bezug auf Fig. 3(a) ein Produktionsträger 30 bereitgestellt, dessen Oberfläche eine geringe Adhäsion zu Prägelack und eine hohe Adhäsion zu Metall aufweist. Die Flächenausdehnung des Produktionsträgers 30 definiert eine x-y-Ebene und eine darauf senkrecht stehende z-Achse. Der Produktionsträger 30 ist bevorzugt eine Kunststoff-Folie. Er weist insbesondere eine glatte Oberfläche oder eine haftungsreduzierte Oberfläche auf.

In einem Flächenbereich 20 des Produktionsträgers 30 wird auf dessen Oberfläche in den gewünschten Teilbereichen eine erste Prägelackschicht 32 aufgebracht und eine erste Prägung in Form der gewünschten Mikrospiegelprägung 34 in die Prägelackschicht 32 eingeprägt, wie in Fig. 3b gezeigt. In dem Flächenbereich 20 werden dadurch einerseits Lackbereiche 52 mit einer geprägten Prägelackschicht 32, 34 und andererseits Freibereiche 54 ohne Prägelackschicht erzeugt, wobei die Freibereiche 54 den gewünschten Aussparungen 42 im fertigen Sicherheitselement (Fig. 2) und die Lackbereiche 52 den gewünschten Bereichen 44 außerhalb der Aussparungen 42 entsprechen. Um zu gewährleisten, dass auf der Oberfläche neben den Lackbereichen 52 auch die gewünschten Freibereiche 54 entstehen, werden die Benetzungseigenschaften des Prägelacks sowohl auf dem Produktionsträger 30 als auch dem selbst nicht gezeigten Prägewerkzeug entsprechend gewählt bzw. eingestellt.

Die Prägelackschicht 32 kann insbesondere mittels Siebdruck, Offsetdruck, Flexodruck oder Tiefdruck aufgebracht werden. Als Prägelack kann insbesondere UV-Lack, ein thermoplastischer Lack oder ein dual cure System, also eine Kombination aus UV-Prägelack und thermoplastischem Lack verwendet werden.

Nach dem Aufbringen und Prägen der ersten Prägelackschicht 32 wird der Flächenbereich 20 vollflächig metallisiert, beispielsweise mit einer Aluminiumschicht. Die Metallisierung erfolgt vorzugsweise durch Aufdampfen (PVD, CVD). Durch die vollflächige Metallisierung wird die Metallschicht 36 in den Freibereichen 54 auf der Oberfläche des Produktionsträgers 30, und in den Lackbereichen 52 auf der ersten geprägten Prägelackschicht 32, 34 aufgebracht, so dass in den Lackbereichen 52 eine erste reflektierende Prägestruktur auf einer ersten Höhenstufe H1 entsteht, wie in Fig. 3(c) dargestellt. Die aufgedruckte und/ oder ausgehärtete erste Prägelackschicht 32 im Lackbereich 52 haftet ungefähr um einen Faktor 10 schlechter an dem Produktionsträger 30 als die aufgedampfte erste reflexionserhöhende Schicht 36 (4 bis 8 N/m gegenüber 50 bis 90 N/m).

Die auf diese Weise in dem Flächenbereich 20 gebildete Struktur wird vorliegend als Primärstruktur bezeichnet, die nachfolgend mit einer als Sekundärstruktur bezeichneten Struktur ergänzt wird, die ihrerseits eine im fertigen Produkt innenliegende zweite, geprägte und metallisierte Prägelackschicht und einen außen liegenden (End-)Produktträger aufweist.

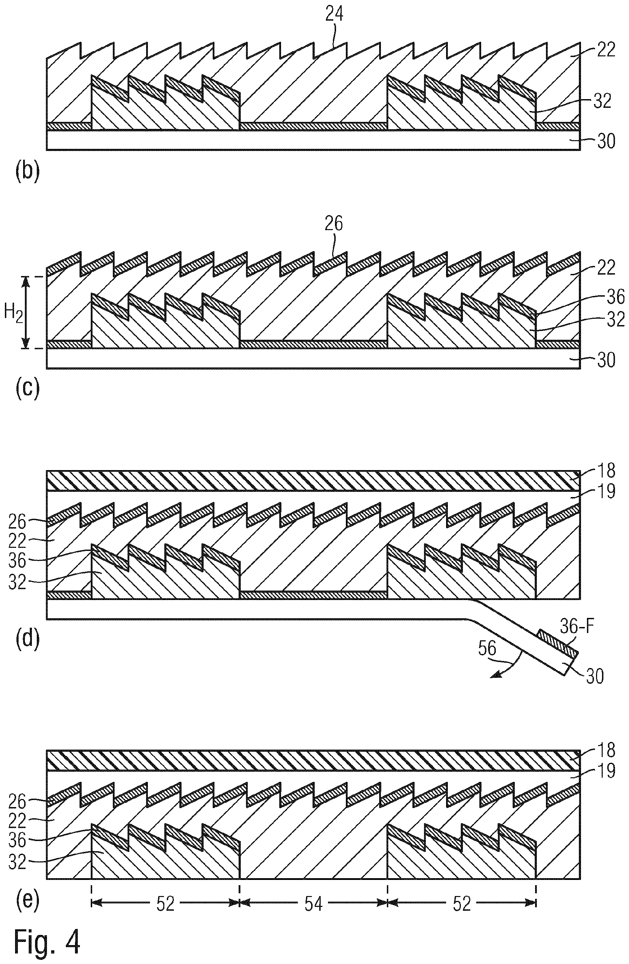

Bei der zuerst beschriebenen Verfahrensvariante der Fig. 4 wird hierzu eine vollflächige zweite Prägelackschicht 22 auf die Primärstruktur der Fig. 3(c) aufgebracht, wie in Fig. 4(a) dargestellt, und diese zweite Prägelackschicht 22 dann mit der zweiten Prägung in Form der gewünschten Mikrospiegelprägung 24 versehen, wie in Fig. 4(b) gezeigt.

Anschließend wird der Flächenbereich 20 erneut vollflächig metallisiert, beispielsweise mit einer Kupferschicht, und dadurch eine zweite Metallschicht 26 vollflächig auf die geprägte zweite Prägelackschicht 22, 24 aufgebracht, so dass dort eine zweite reflektierende Prägestruktur auf einer zweiten Höhenstufe H2 entsteht, wie in Fig. 4(c) dargestellt.

Dann wird der Endproduktträger 18 bereitgestellt und mit Hilfe einer Klebeschicht 19 auf die metallisierte Prägelackschicht 22 aufgeklebt, wie in Fig. 4(d) gezeigt. Der Endproduktträger 18 und die Klebeschicht 19 werden dabei so gewählt, dass die Adhäsion Zielsubstrat 18 - Klebeschicht 19 - Metallisierung 26 größer ist als die Adhäsion Produktionsträger 30 - Prägelackschicht 32 bzw. Metallisierung 36.

Anschließend wird der Produktionsträger 30 von der so gebildeten Kombinationsstruktur abgezogen 56, siehe Fig. 4(d). Aufgrund der großen Adhäsion des Produktionsträgers 30 zum aufgedampften Metall und der geringen Adhäsion des Produktionsträgers zum Prägelack wird beim Abziehen 56 das in den Freibereichen 54 liegende Metall zusammen mit dem Produktionsträger abgezogen, während der Prägelack 32 und damit auch dessen Metallisierung 36 in den Lackbereichen 52 in der Kombinationsstruktur zurückbleibt, wie in Fig. 4(e) gezeigt. Der Prägelack 32 der Lackbereiche 52 bildet somit einen Abhebeschutz für die Prägelack-Metallisierung und gewährleistet eine partielle Demetallisierung der Metallschicht 36 nur in den Freibereichen 54.

Nach dem Abziehen des Produktionsträgers 30 erfolgt optional ein Ätzschritt, bei dem eventuelle Metallreste auf der freigelegten Oberfläche entfernt werden.

Die erste reflexionserhöhende Beschichtung 36 wurde bisher als farbige Metallschicht beschrieben, welche somit auch als Farbbeschichtung bezeichnet wird. Die reflexionserhöhende(n) Beschichtung(en) 36 (36,26) kann (können) aber - wie bereits angedeutet in dieser und in den weiteren Ausgestaltungen - auch anders ausgebildet sein. Anstelle einer Metallschicht kann auch eine farbgebende HRI-Schicht verwendet werden. Ebenso können die (oder eine der) reflexionserhöhenden Beschichtungen 26, 36 durch eine unbunte reflexionserhöhende Teilschicht, wie Metallschicht oder HRI-Schicht, und eine (zum Betrachter gesehen - darüber liegende) lasierende Farbteilschicht gebildet sein.

Ebenfalls nicht separat figürlich dargestellt sind Ausgestaltungen, in denen eine erste reflexionserhöhende Schicht erst zusammen mit weiteren Schichten eine farbliche Wirkung erzeugt. Beim Abziehen des Produktionsträgers verbleibt zumindest eine der weiteren Schichten in der Kombinationsstruktur mit seinen zwei Prägestrukturen. Alternativ oder ergänzend wird die eine der weiteren Schichten bei einem Entfernen der ersten reflexionserhöhenden Schicht durch Ätzen nicht mit entfernt. In Fig. 3c würden (in den Freibereichen 54 und den Lackbereichen 52) die weiteren Schichten auf der ersten reflexionserhöhenden Schicht 36 liegen, in Fig. 4c also zwischen der ersten reflexionserhöhenden Schicht 36 und der zweiten Prägelackschicht 22 liegen. Die erste reflexionserhöhende Schicht kann als Reflektor oder als Absorber eines farbgebenden Mehrschichtaufbaus dienen, der beispielsweise als Absorber-Dielektrikum-Absorber- oder Reflektor-Dielektrikum-Absorber- eine farbliche Wirkung erzeugt. Ebenso könnte die reflexionserhöhende Schicht eine HRI-Schicht eines farbgebenden brechnungsindexbasierten Mehrschichtaufbaus sein, der aus transparenten Teilschichten unterschiedlicher Brechnungsindizes besteht. Durch das Entfernen der ersten reflexionserhöhenden Schicht verliert der Mehrschichtaufbau seine farbige Wirkung. Die Farbe des Mehrschichtaufbaus und die Reflektivität der reflexionserhöhenden Schicht kann in den Freibereichen 42 somit gleichzeitig (und passergenau) entfernt werden.

Die farblich unterschiedlichen Wirkungen der ersten und/ oder der zweiten Reliefstruktur der Kombinationsstruktur könnte - in allen Ausführungsformen auch der weiteren Figuren, welche auch wiederum farbgebende Prägelack- oder Kleberschichten umfassen - auf einem der genannten Wege oder auf unterschiedlichen der genannten Wege erzielt werden.

Der zuvor erwähnte Ätzschritt kann in anderen Ausgestaltungen, in denen die Metallschicht 36 in den Freibereichen 54 beim Abziehen auf dem Prägelack verbleibt, obligatorisch sein. In den anderen Ausgestaltungen wird erst durch das Ätzen die reflexionserhöhende Schicht in den Freibereichen entfernt.

Anschließend kann die durch das Abziehen des Produktionsträgers 30 freigelegte Oberfläche zur Verbesserung der Umlaufbeständigkeit des Sicherheitselements 12 mit einer Schutzlackschicht 48 (Fig. 2) versehen oder eine dünne, transparente (PET-)Folie aufkaschiert werden. Je nach der vorgesehenen Verwendung des Sicherheitselements, beispielsweise als Sicherheitsfaden zur Einbettung in Sicherheitspapier, können zur Fertigstellung weitere an sich bekannte Produktionsschritte erfolgen, wie beispielsweise ein Ablackieren mit einem Heißsiegellack.

Wie weiter oben erläutert, beziehen sich die Bezeichnungen "tiefer liegende Reliefstruktur" und "höher liegende Reliefstruktur" auf die Lage der Reliefstrukturen im fertigen Sicherheitselement (Fig. 2) relativ zu einem Betrachter. Die Bezeichnungen spiegeln daher nicht die Reihenfolge des Aufbringens der Reliefstrukturen bei der Herstellung wider. Da das Sicherheitselement insbesondere auf Betrachtung von der Seite des später abgezogenen Produktionsträgers her ausgelegt ist, wird bei der beschriebenen Herstellung zunächst die (später) höher liegende Reliefstruktur auf dem Produktionsträger erzeugt und darauf dann die (später) tiefer liegende Reliefstruktur.

Zurückkommend auf die Primärstruktur der Fig. 3(c) kann diese beispielsweise auch in der in Fig. 5 gezeigten Art mit einer Sekundärstruktur ergänzt werden.

Bei dieser Verfahrensvariante wird zunächst ein Endproduktträger 18 bereitgestellt und vollflächig mit einer zweiten Prägelackschicht 22 bedruckt. Die zweite Prägelackschicht 22 wird dann mit der zweiten Prägung in Form der gewünschten Mikrospiegelprägung 24 versehen und, beispielsweise mit einer Kupferschicht, vollflächig metallisiert, um die zweite Metallschicht 26 aufzubringen, wie in Fig. 5(a) gezeigt.

Dann wird auf die Metallisierung 36 des Produktionsträgers 30 oder auf die Metallisierung 26 des Endproduktträgers 18 oder auf beide Metallisierungen 26, 36 ein Kaschierlack 60 aufgebracht. Der Kaschierlack kann klar transparent sein oder transparent eingefärbt sein. In Fig. 5(b) ist beispielhaft die Variante einer Aufbringung des Kaschierlacks 60 nur auf die Metallisierung 36 des Produktionsträgers 30 gezeigt.

Anschließend werden die mit Kaschierkleber, beispielsweise in Form des Kaschierlacks 60, versehene Primärstruktur der Fig. 5(b) und die Sekundärstruktur der Fig. 5(a) registriert zusammenkaschiert, so dass die beiden Metallisierungen 26, 36 durch den Kaschierkleber 60 getrennt sind, wie in Fig. 5(c) gezeigt.

Auch hier wird darauf geachtet, dass die Adhäsion Endproduktträger 18 - zweite Prägelackschicht 22 - Metallisierung 26 größer ist als die Adhäsion Produktionsträger 30 - Prägelackschicht 32 bzw. Metallisierung 36. Der Produktionsträger 30 kann insbesondere mit einer angerauten Oberfläche versehen werden, so dass die obere Oberfläche der Metallisierung 36 zum Kaschierlack 60 glatter ist als die die untere Oberfläche der Metallisierung 36.

Schließlich wird der Produktionsträger 30 von der so gebildeten Kombinationsstruktur abgezogen 56, wie in Fig. 5(c) gezeigt. Aufgrund der großen Adhäsion des Produktionsträgers 30 zu Metall und der geringen Adhäsion des Produktionsträgers zu Prägelack wird beim Abziehen 56 das in den Freibereichen 54 liegende Metall zusammen mit dem Produktionsträger abgezogen, während der Prägelack 32 und damit auch dessen Metallisierung 36 in den Lackbereichen 52 in der Kombinationsstruktur zurückbleibt, wie in Fig. 5(d) gezeigt. Der Prägelack 32 der Lackbereiche 52 bildet auch in dieser Verfahrensvariante einen Abhebeschutz für die Prägelack-Metallisierung und gewährleistet eine partielle Demetallisierung der Metallschicht 36 nur in den Freibereichen 54.

Auch bei der zweiten Verfahrensvariante kann nach dem Abziehen des Produktionsträgers 30 ein Ätzschritt erfolgen. In diesem Ätzschritt werden in der Ausgestaltung nach Fig. 5 eventuelle Metallreste auf der freigelegten Oberfläche entfernt werden. Analog zu Fig. 4 gilt jedoch, dass in anderen Ausgestaltungen mit Kaschierkleber ein Entfernen der ersten reflexionserhöhenden Schicht nur durch Ätzen denkbar wäre.

Die durch Abziehen des Produktionsträgers 30 freigelegte Oberfläche kann zur Verbesserung der Umlaufbeständigkeit des Sicherheitselements weiter mit einer Schutzlackschicht versehen oder es kann eine dünne, transparenten (PET-)Folie aufkaschiert werden. Je nach der vorgesehenen Verwendung des Sicherheitselements, beispielsweise als Sicherheitsfaden zur Einbettung in Sicherheitspapier, können zur Fertigstellung weitere, an sich bekannte Produktionsschritte erfolgen, wiederum beispielsweise ein Aufbringen von Heißsiegellack.

Die beschriebenen Gestaltungen können zur zusätzlichen Absicherung mit Negativkennzeichen, beispielsweise in Form von Text, Symbolen oder Wertzahlen versehen sein. Die Negativkennzeichen sind für eine Betrachtung in Durchsicht vorgesehen.

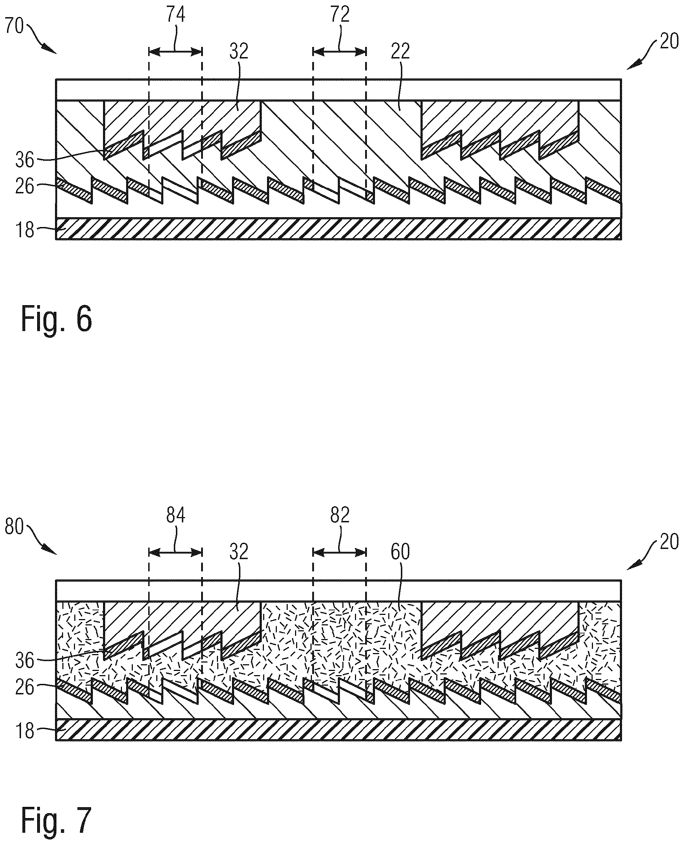

Figur 6 zeigt hierzu ein Sicherheitselement 70, das wie das Sicherheitselement der Fig. 2 gemäß der ersten Verfahrensvariante, allerdings mit zusätzlich eingebrachten Negativkennzeichen 72, 74 hergestellt wurde. Die ersten Negativkennzeichen 72 sind in den Freibereichen 54 des Flächenbereichs 20 vorgesehen, in denen nur die zweite Prägestruktur 22, 24, 26 vorliegt, und sind durch eine partielle Demetallisierung der zweiten Farbbeschichtung 26 gebildet. Ist die zweite Prägelackschicht 22 farblos transparent, erscheinen auch die Negativkennzeichen 72 farblos transparent, während die Negativkennzeichen 72 im Fall einer farbigen zweiten Prägelackschicht 22 mit der Durchsichtsfarbe der Prägelackschicht 22 erscheinen.

Die zweiten Negativkennzeichen 74 sind in den Lackbereichen 52 des Flächenbereichs 20 vorgesehen, in denen die beiden Prägestrukturen überlappen, und sind durch eine partielle Demetallisierung sowohl der ersten Farbbeschichtung 36 als auch der zweiten Farbbeschichtung 26 gebildet. Sind beide Prägelackschichten 22, 32 farblos transparent, erscheinen auch die Negativkennzeichen 74 farblos transparent. Ist eine der beiden Prägelackschichten 22, 32 farbig, die andere farblos transparent, so erscheinen die Negativkennzeichen 74 mit der Durchsichtsfarbe der farbigen Prägelackschicht. Sind beide Prägelackschichten 22, 32 farbig, so treten die Negativkennzeichen 74 mit einer Durchsichtsfarbe in Erscheinung, die sich durch subtraktive Farbmischung der Farben der Prägelackschichten 22, 32 ergibt.

Figur 7 zeigt ein Sicherheitselement 80, das gemäß der zweiten Verfahrensvariante der Fig. 5, allerdings mit zusätzlich eingebrachten Negativkennzeichen 82, 84 hergestellt wurde. Die ersten Negativkennzeichen 82 sind in den Freibereichen 54 des Flächenbereichs 20 vorgesehen, in denen nur die zweite Prägestruktur 22, 24, 26 vorliegt, und sind durch eine partielle Demetallisierung der zweiten Farbbeschichtung 26 gebildet. Ist der Kaschierlack 60 farblos transparent, erscheinen auch die Negativkennzeichen 82 farblos transparent. Im Fall eines farbigen Kaschierlacks 60 erscheinen die Negativkennzeichen 82 mit der Durchsichtsfarbe des Kaschierlacks 60.

Die zweiten Negativkennzeichen 84 sind in den Lackbereichen 52 des Flächenbereichs 20 vorgesehen, in denen die beiden Prägestrukturen überlappen, und sind durch eine partielle Demetallisierung sowohl der ersten Farbbeschichtung 36 als auch der zweiten Farbbeschichtung 26 gebildet. Sind die Prägelackschicht 32 und der Kaschierlack 60 farblos transparent, erscheinen auch die Negativkennzeichen 84 farblos transparent. Ist eine der beiden Schichten (Prägelackschicht 32, Kaschierlack 60) farbig, die andere farblos transparent, so erscheinen die Negativkennzeichen 84 mit der Durchsichtsfarbe der farbigen Schicht. Sind sowohl die Prägelackschicht 32 als auch der Kaschierlack 60 farbig, so treten die Negativkennzeichen 84 mit einer Durchsichtsfarbe in Erscheinung, die sich durch subtraktive Farbmischung der Farben der beiden Schichten 32, 60 ergibt.

### Bezugszeichenliste

- 10: Banknote
- 12: Sicherheitselement
- 14: Motiv
- 16: Teilbereich
- 18: Endproduktträger
- 20: reflektiver Flächenbereich
- 22: zweite Prägelackschicht
- 24: zweite Prägestruktur
- 26: zweite Beschichtung
- 30: Produktionsträger
- 32: erste Prägelackschicht
- 34: erste Prägestruktur
- 36: erste Beschichtung
- 42: Aussparung
- 44: Bereich außerhalb der Aussparung
- 48: Schutzlackschicht
- 52: Lackbereiche
- 54: Freibereiche
- 60: Kaschierlack
- 70: Sicherheitselement
- 72,74: Negativkennzeichen
- 80: Sicherheitselement
- 82, 84: Negativkennzeichen

## Patentansprüche

1. Verfahren zum Herstellen eines optisch variablen Sicherheitselements (12), bei dem
- ein Produktionsträger (30) bereitgestellt wird, dessen Flächenausdehnung eine darauf senkrecht stehende z-Achse definiert;
- in einem Flächenbereich (20) auf die Oberfläche des Produktionsträgers nur in Teilbereichen eine erste Prägelackschicht (32) aufgebracht wird, so dass in dem Flächenbereich Lackbereiche (52) mit einer Prägelackschicht und Freibereiche (54) ohne Prägelackschicht entstehen;
- die aufgebrachte erste Prägelackschicht (32) auf einer ersten Höhenstufe mit einer ersten Prägung (34) versehen wird;
- der Flächenbereich (20) in den Freibereichen (54) und in den Lackbereichen (52) mit einer ersten Beschichtung (36) versehen wird;
- der Flächenbereich (20) in den Freibereichen (54) und optional in den Lackbereichen (52) mit einer weiteren Schicht versehen wird; und
- in den Freibereichen (54) die erste Beschichtung (36) wieder entfernt wird;
**dadurch gekennzeichnet, dass**
- der Produktionsträger (30) abgezogen wird;
- die weitere Schicht eine zweite Prägelackschicht (22) ist, welche mit einer zweiten Prägung (24) - auf einer zweiten, von der ersten Höhenstufe in z-Richtung beabstandeten Höhenstufe - versehen wird, so dass eine Kombinationsstruktur mit den zwei Prägungen (34, 24) auf zwei Höhenstufen entsteht; und
- die erste Prägelackschicht (32) ein Entfernen der ersten Beschichtung (36) in den Lackbereichen (52) bei oder nach dem Abziehen des Produktionsträgers (30) von der Kombinationsstruktur verhindert.

2. Verfahren nach Anspruch 1, **dadurch gekennzeichnet, dass**
in den Lackbereichen (52) die erste Prägelackschicht (32) bei dem Abziehen des Produktionsträgers (30) in der Kombinationsstruktur verbleibt, insbesondere da sie eine geringere Adhäsion zum Produktionsträger (30) aufweist als die erste Beschichtung (36); und/oder
in den Freibereichen (54) die erste Beschichtung (36) mit dem Produktionsträger (30) abgezogen und somit entfernt wird, insbesondere da die erste Beschichtung (36) eine höhere Adhäsion zum Produktionsträger (30) aufweist als die Prägelackschicht (32) zum Produktionsträger (30) und/ oder als die erste Beschichtung (36) zur zweiten Prägelackschicht (22).

3. Verfahren nach Anspruch 1 oder 2, **dadurch gekennzeichnet, dass**
in den Lackbereichen (52) die erste Prägelackschicht (32) das Entfernen der ersten Beschichtung (36) nach dem Abziehen des Produktionsträgers verhindert, insbesondere indem sie eine höhere Resistenz gegen ein Ätzmittel aufweist als die erste Beschichtung (36); und/ oder
in den Freibereichen (54) nach dem Abziehen des Produktionsträgers die erste Beschichtung (36) oder ein Rest der ersten Beschichtung (36) durch Ätzen entfernt wird.

4. Verfahren nach einem der Ansprüche 1 bis 3, **dadurch gekennzeichnet, dass** die erste Beschichtung (36) eine reflexionserhöhende Beschichtung ist, welche der ersten Prägung (34) folgt; wobei vorzugsweise eine zweite reflexionserhöhende Beschichtung (26) der zweiten Prägung (24) folgt.

5. Verfahren nach einem der Ansprüche 1 bis 4, **dadurch gekennzeichnet, dass** die Kombinationsstruktur eine erste und eine zweite unterschiedlich farbig wirkende, vorzugsweise reflektive, Reliefstruktur (32, 36; 22, 26) umfasst, insbesondere jeweils gebildet durch die erste respektive zweite Prägelackschicht, die erste respektive zweite reflexionserhöhende Schicht und eine optionale Farbschicht.

6. Verfahren nach einem der Ansprüche 1 bis 5, **dadurch gekennzeichnet, dass** ein Produktträger (18) der Kombinationsstruktur (24, 34) aufgebracht wird, wobei vorzugsweise zumindest die erste Prägelackschicht (32), insbesondere nur die erste oder beide Prägelackschichten (32, 22), zwischen dem Produktträger (18) und dem Produktionsträger (30) angeordnet wird.

7. Verfahren nach Anspruch 6, **dadurch gekennzeichnet, dass** der Produktträger (18) ein Endproduktträger ist, der einen Teil des optisch variablen Sicherheitselements (12) bildet, oder der Produktträger (18) ein Transferproduktträger ist, auf welchem das optisch variable Sicherheitselement (12) lösbar angeordnet ist.

8. Verfahren nach einem der Ansprüche 1 bis 7, **dadurch gekennzeichnet, dass** die zweite Prägelackschicht (22) aufgebracht und dann mit der zweiten Prägung (24) versehen wird; wobei vorzugsweise
die zweite Prägelackschicht (22) mit einer Oberfläche der zweiten Prägung (24) folgt und mit der zweiten Oberfläche der ersten Prägung (34) folgt, und/ oder
die geprägte zweite Prägelackschicht mit der zweiten reflexionserhöhenden Beschichtung versehen wird, und/oder
ein Produktträger (18) bereitgestellt und über eine Klebeschicht (19) mit der, insbesondere beschichteten, geprägten zweiten Prägelackschicht (22) verbunden wird.

9. Verfahren nach einem der Ansprüche 1 bis 7, **dadurch gekennzeichnet, dass** eine geprägte zweite Prägelackschicht (22) bereitgestellt, insbesondere auf einem Produktträger (18), und mittels einer Klebeschicht (60), insbesondere einer Kaschierkleberschicht, aufgebracht wird; wobei insbesondere
zuvor die zweite Prägelackschicht (22) auf dem Produktträger (18) mit der zweiten Prägung versehen wird, und/ oder
zuvor die geprägte zweite Prägelackschicht mit der zweiten reflexionserhöhenden Beschichtung versehen wird, und/ oder
die Klebeschicht (60) mit einer Oberfläche der zweiten Prägung (24) folgt und mit der zweiten Oberfläche der ersten Prägung (34) folgt.

10. Verfahren nach einem der Ansprüche 1 bis 9, **dadurch gekennzeichnet, dass** die erste Prägelackschicht (32) und/oder die zweite Prägelackschicht (22) eine transparente Prägelackschicht oder eine lasierend eingefärbte Prägelackschicht ist.

11. Verfahren nach einem der Ansprüche 1 bis 10, **dadurch gekennzeichnet, dass**
die erste Beschichtung (36) und/ oder die zweite reflexionserhöhende Beschichtung (26) eine reflexionserhöhende Farbbeschichtung ist, insbesondere gebildet durch eine farbige Metallisierung, durch eine farbgebende HRI-Schicht, durch einen farbkippenden oder farbfilternden reflektiven Mehrschichtaufbau oder durch mit einer Verspiegelung hinterlegte lasierende und/oder lumineszierende Farbe; oder
die erste Beschichtung (36), welche eine reflexionserhöhende Beschichtung ist, und/oder die zweite reflexionserhöhende Beschichtung (26), durch eine Unterstruktur, insbesondere Subwellenlängenstruktur oder Interferenzstruktur, ihrer Prägung (34, 24) farbig reflektieren; oder
für die erste Beschichtung (36), welche eine reflexionserhöhende Beschichtung ist, und/oder für die zweite reflexionserhöhende Beschichtung (26) eine separate erste respektive zweite lasierende Farbschicht vorgesehen ist.

12. Verfahren nach einem der Ansprüche 1 bis 11, **dadurch gekennzeichnet, dass** die Lackbereiche (52) und Freibereiche (54) zumindest in einem Teilbereich des Flächenbereichs als regelmäßiges oder unregelmäßiges Raster mit Rasterelementen und Rasterzwischenräumen ausgebildet werden, wobei die Abmessungen Rasterelemente in einer oder beiden lateralen Richtungen unterhalb von 140 µm, vorzugsweise zwischen 20 µm und 100 µm, insbesondere zwischen 20 µm und 60 µm liegen, wobei vorzugsweise das durch die Lackbereiche (52) und Freibereiche (54) gebildete Raster mit einer konstanter Flächendeckung durch die Rasterelemente ausgebildet wird, welche zweckmäßig zwischen 30% und 70%, vorzugsweise zwischen 40% und 60%, insbesondere bei etwa 50% liegt.

13. Verfahren nach einem der Ansprüche 1 bis 12, **dadurch gekennzeichnet, dass** die Lackbereiche (52) und Freibereiche (54) zumindest in einem Teilbereich des Flächenbereichs (20) als Effektbereich ausgebildet werden, in welchem die Lackbereiche und/ oder die Freibereiche laterale Abmessungen von mehr als 140 µm aufweisen, wobei vorzugsweise zumindest ein Lackbereich (52) und/ oder zumindest ein Freibereich (54) mit lateralen Abmessungen von mehr als 250 µm, vorzugsweise von mehr als 500 µm und insbesondere von mehr als 1 mm ausgebildet werden.

14. Verfahren nach einem der Ansprüche 1 bis 13, **dadurch gekennzeichnet, dass** die mit reflexionserhöhenen Beschichtungen (26, 36) versehenen Prägungen (24, 34) der Kombinationsstruktur Mikrospiegelanordnungen mit gerichteten Mikrospiegeln bilden, insbesondere mit planen Spiegeln, Hohlspiegeln und/ oder fresnelartigen Spiegeln, wobei die lateralen Abmessungen der Mikrospiegel vorteilhaft unterhalb von 50 µm, bevorzugt unterhalb von 20 µm, besonders bevorzugt unterhalb von 10 µm liegen.

15. Verfahren nach einem der Ansprüche 1 bis 14, **dadurch gekennzeichnet, dass** in den Lackbereichen (52) und/ oder in den Freibereichen (54) des reflektiven Flächenbereiches (20) transmissive Negativkennzeichen (72,74) gebildet werden, insbesondere indem in den Lackbereichen deckungsgleiche Aussparungen in der ersten und zweiten reflexionserhöhenden Beschichtung erzeugt werden und/oder in den Freibereichen Aussparungen in der zweiten reflexionserhöhenden Beschichtung erzeugt werden.

## Claims

1. Method for producing an optically variable security element (12), wherein
- a production carrier (30) is provided, the planar extent of which defines a z-axis perpendicular thereto;
- one area (20) on the surface of the production carrier sees the application of a first embossing varnish layer (32) only in portions, with the result that varnish regions (52) with an embossing varnish layer and clear regions (54) without embossing varnish layer are created in the area;
- the applied first embossing varnish layer (32) is provided with a first embossing (34) at a first height;
- a first coating (36) is applied to the area (20) in the clear regions (54) and in the varnish regions (52);
- a further layer is applied to the area (20) in the clear regions (54) and optionally in the varnish regions (52); and
- the first coating (36) is removed from the clear regions (54) again;
**characterized in that**
- the production carrier (30) is stripped away;
- the further layer is a second embossing varnish layer (22) provided with a second embossing (24) - at a second height spaced apart from the first height in the z-direction - with the result that a combination structure having the two embossings (34, 24) at two heights is created; and
- the first embossing varnish layer (32) prevents a removal of the first coating (36) in the varnish regions (52) during or after the stripping of the production carrier (30) from the combination structure.

2. Method according to Claim 1, **characterized in that** the first embossing varnish layer (32) remains in the combination structure in the varnish regions (52) when the production carrier (30) is stripped away, in particular since the said first embossing varnish layer adheres less to the production carrier (30) than the first coating (36); and/or
the first coating (36) is stripped off with the production carrier (30) in the clear regions (54) and thus removed, in particular since the first coating (36) adheres more to the production carrier (30) than the embossing varnish layer (32) adheres to the production carrier (30) and/or the first coating (36) adheres to the second embossing varnish layer (22).

3. Method according to Claim 1 or 2, **characterized in that** the first embossing varnish layer (32) prevents the removal of the first coating (36) in the varnish regions (52) after the production carrier has been stripped off, in particular by virtue of having greater resistance to an etching means than the first coating (36); and/or the first coating (36) or a residue of the first coating (36) is removed by etching from the clear regions (54) after the production carrier has been stripped off.

4. Method according to any of Claims 1 to 3, **characterized in that** the first coating (36) is a reflection-enhancing coating which follows the first embossing (34); wherein, preferably, a second reflection-enhancing coating (26) follows the second embossing (24).

5. Method according to any of Claims 1 to 4, **characterized in that** the combination structure comprises a first and a second relief structure (32, 36; 22, 26) which have different colour effects and are preferably reflective, in particular formed in each case by the first and, respectively, second embossing varnish layer, the first and, respectively, second reflection-enhancing layer and an optional colour layer.

6. Method according to any of Claims 1 to 5, **characterized in that** a product carrier (18) of the combination structure (24, 34) is applied, with, preferably, at least the first embossing varnish layer (32), in particular only the first or both embossing varnish layers (32, 22), being arranged between the product carrier (18) and the production carrier (30).

7. Method according to Claim 6, **characterized in that** the product carrier (18) is a final product carrier which forms part of the optically variable security element (12), or the product carrier (18) is a transfer product carrier on which the optically variable security element (12) is detachably arranged.

8. Method according to any of Claims 1 to 7, **characterized in that** the second embossing varnish layer (22) is applied and then provided with the second embossing (24); with preferably
the second embossing varnish layer (22) following the second embossing (24) with one surface and following the first embossing (34) with the second surface, and/or
the embossed second embossing varnish layer being provided with the second reflection-enhancing coating and/or
a product carrier (18) being provided and connected via an adhesive layer (19) to the embossed second embossing varnish layer (22), which has been coated in particular.

9. Method according to any of Claims 1 to 7, **characterized in that** an embossed second embossing varnish layer (22) is provided, in particular on a product carrier (18), and applied by means of an adhesive layer (60), in particular a laminating adhesive layer; with in particular
the second embossing varnish layer (22) on the product carrier (18) being provided with the second embossing in advance and/or
the embossed second embossing varnish layer being provided with the second reflection-enhancing layer in advance and/or
the adhesive layer (60) following the second embossing (24) with one surface and following the first embossing (34) with the second surface.

10. Method according to any of Claims 1 to 9, **characterized in that** the first embossing varnish layer (32) and/or the second embossing varnish layer (22) is a transparent embossing varnish layer or an embossing varnish layer with a glazed colouration.

11. Method according to any of Claims 1 to 10, **characterized in that**
the first coating (36) and/or the second reflection-enhancing coating (26) is a reflection-enhancing colour coating, in particular formed by a coloured metallization, by a colour-giving HRI layer, by a colourtilting or colour-filtering reflective multi-layer construction or by a glazed and/or luminescent colour deposited on a reflective structure; or
the first coating (36), which is a reflection-enhancing coating, and/or the second reflection-enhancing coating (26) reflects in colour by way of a substructure, in particular a sub-wavelength structure or interference structure, of its embossing (34, 24); or
a separate first and, respectively, second glazed colour layer are provided for the first coating (36), which is a reflection-enhancing coating, and/or for the second reflection-enhancing coating (26).

12. Method according to any of Claims 1 to 11, **characterized in that** the varnish regions (52) and clear regions (54) are formed as a regular or irregular grid with grid elements and grid interspaces, at least in a portion of the area, with the dimensions of the grid elements in one or both lateral directions being less than 140 µm, preferably between 20 µm and 100 µm and in particular between 20 µm and 60 µm, with, preferably, the grid formed by the varnish regions (52) and clear regions (54) being formed by the grid elements with a constant area coverage which is expediently between 30% and 70%, preferably between 40% and 60% and in particular at approximately 50%.

13. Method according to any of Claims 1 to 12, **characterized in that** the varnish regions (52) and clear regions (54) are formed as an effect region in at least a portion of the area (20), in which effect region the varnish regions and/or the clear regions have lateral dimensions of more than 140 µm, with, preferably, at least one varnish region (52) and/or at least one clear region (54) being formed with lateral dimensions of more than 250 µm, preferably more than 500 µm and in particular more than 1 mm.

14. Method according to any of Claims 1 to 13, **characterized in that** the embossings (24, 34) of the combination structure provided with reflection-enhancing coatings (26, 36) form micromirror arrangements with directed micromirrors, in particular with plane mirrors, concave mirrors and/or Fresnel-like mirrors, with the lateral dimensions of the micromirrors advantageously being less than 50 µm, preferably less than 20 µm and particularly preferably less than 10 µm.

15. Method according to any of Claims 1 to 14, **characterized in that** transmissive negative features (72, 74) are formed in the varnish regions (52) and/or in the clear regions (54) of the reflective area (20), in particular by virtue of congruent cutouts being created in the first and second reflection-enhancing coating in the varnish regions and/or cutouts being created in the second reflection-enhancing coating in the clear regions.

## Revendications

1. Procédé de fabrication d'un élément de sécurité optiquement variable (12), procédé dans lequel
- un support de production (30) est prévu dont l'étendue de surface définit un axe z perpendiculaire à celui-ci ;
- dans une zone de surface (20), une première couche de vernis de gaufrage (32) est appliquée sur la surface du support de production uniquement par sous-zones, de sorte que les zones de vernis (52) pourvue d'une couche de vernis de gaufrage et les zones libres (54) sans couche de vernis gaufrée sont générées dans la zone de surface ;
- la première couche de vernis de gaufrage appliquée (32) est pourvue d'un premier gaufrage (34) à un premier niveau en hauteur ;
- la zone de surface (20) est pourvue d'un premier revêtement (36) dans les zones libres (54) et dans les zones de vernis (52) ;
- la zone de surface (20) est pourvue d'une couche supplémentaire dans les zones libres (54) et éventuellement dans les zones de vernis (52) ; et
- le premier revêtement (36) est à nouveau enlevé dans les zones libres (54) ;
**caractérisé en ce que**
- le support de production (30) est retiré ;
- la couche supplémentaire est une deuxième couche de vernis de gaufrage (22) qui est pourvue d'un deuxième gaufrage (24) à un deuxième niveau en hauteur distant du premier niveau en hauteur dans la direction z de sorte qu'une structure combinée comprenant les deux gaufrages (34, 24) est générée sur deux niveaux en hauteur ; et
- la première couche de vernis de gaufrage (32) empêche l'élimination du premier revêtement (36) dans les zones de vernis (52) pendant ou après le retrait du support de production (30) de la structure combinée.

2. Procédé selon la revendication 1, **caractérisé en ce que**
dans les zones de vernis (52), la première couche de vernis de gaufrage (32) reste dans la structure combinée lors du retrait du support de production (30), en particulier parce qu'elle présente une adhérence moindre au support de production (30) que le premier revêtement (36) ; et/ou
dans les zones libres (54), le premier revêtement (36) est retiré avec le support de production (30) et ainsi est enlevé, en particulier parce que le premier revêtement (36) présente une adhérence plus élevée au support de production (30) que celle de la couche de vernis de gaufrage (32) au support de production (30) et/ou que celle du premier revêtement (36) à la deuxième couche de vernis de gaufrage (22).

3. Procédé selon la revendication 1 ou 2, **caractérisé en ce que**
dans les zones de vernis (52), la première couche de vernis de gaufrage (32) empêche l'enlèvement du premier revêtement (36) après le retrait du support de production, notamment du fait qu'elle a une résistance plus élevée à un agent d'attaque chimique que le premier revêtement (36) ; et/ou
dans les zones libres (54), après le retrait du support de production, le premier revêtement (36) ou un reste du premier revêtement (36) est éliminé par attaque chimique.

4. Procédé selon l'une des revendications 1 à 3, **caractérisé en ce que** le premier revêtement (36) est un revêtement d'augmentation de réflexion qui fait suite au premier gaufrage (34) ; de préférence, un deuxième revêtement d'augmentation de réflexion (26) faisant suite au deuxième gaufrage (24).

5. Procédé selon l'une des revendications 1 à 4, **caractérisé en ce que** la structure combinée comprend une première et une deuxième structure en relief (32, 36 ; 22, 26) de couleurs différentes, de préférence réfléchissantes, notamment chacune étant formée par une première et une deuxième couche de vernis de gaufrage, la première ou la deuxième couche d'augmentation de réflexion et une couche de couleur facultative.

6. Procédé selon l'une des revendications 1 à 5, **caractérisé en ce qu'**un support de produit (18) de la structure combinée (24, 34) est appliqué, de préférence au moins la première couche de vernis de gaufrage (32), en particulier uniquement la première couche de vernis de gaufrage ou les deux couches de vernis gaufrées (32, 22), est disposée entre le support de produit (18) et le support de production (30).

7. Procédé selon la revendication 6, **caractérisé en ce que** le support de produit (18) est un support de produit final qui fait partie de l'élément de sécurité optiquement variable (12), ou le support de produit (18) est un support de produit de transfert sur lequel l'élément de sécurité optiquement variable (12) est disposé de manière amovible.

8. Procédé selon l'une des revendications 1 à 7, **caractérisé en ce que** la deuxième couche de vernis de gaufrage (22) est appliquée puis pourvue du deuxième gaufrage (24) ; de préférence
la deuxième couche de vernis de gaufrage (22) faisant suite au deuxième gaufrage (24) avec une surface et au premier gaufrage (34) avec la deuxième surface, et/ou
la deuxième couche de vernis de gaufrage étant pourvue du deuxième revêtement d'augmentation de réflexion, et/ou
un support de produit (18) étant prévu qui est relié par une couche adhésive (19) à la deuxième couche de vernis de gaufrage (22) gaufrée, en particulier revêtue.

9. Procédé selon l'une des revendications 1 à 7, **caractérisé en ce qu'**une deuxième couche de vernis de gaufrage (22) gaufrée est prévue, notamment sur un support de produit (18), et est appliquée au moyen d'une couche adhésive (60), notamment une couche adhésive de contre-collage ; en particulier
la deuxième couche de vernis de gaufrage (22) étant préalablement pourvue du deuxième gaufrage sur le support de produit (18), et/ou
la deuxième couche de vernis de gaufrage étant préalablement pourvue du deuxième revêtement d'augmentation de réflexion, et/ou
la couche adhésive (60) faisant suite au deuxième gaufrage (24) avec une surface et au premier gaufrage (34) avec la deuxième surface.

10. Procédé selon l'une des revendications 1 à 9, **caractérisé en ce que** la première couche de vernis de gaufrage (32) et/ou la deuxième couche de vernis de gaufrage (22) sont une couche de vernis de gaufrage transparente ou une couche de vernis de gaufrage colorée transparente.

11. Procédé selon l'une des revendications 1 à 10, **caractérisé en ce que**
le premier revêtement (36) et/ou le deuxième revêtement d'augmentation de réflexion (26) est un revêtement coloré d'augmentation de réflexion, en particulier formé par une métallisation colorée, par une couche HRI de coloration, par un changement de couleur ou une structure multicouche réfléchissante de filtrage chromatique ou par une couleur luminescente et/ou transparente doublée en miroir ; ou
le premier revêtement (36), qui est un revêtement d'augmentation de réflexion, et/ou le deuxième revêtement d'augmentation de réflexion (26), effectuent une réflexion chromatique par le biais d'une sousstructure, en particulier une structure à sous-longueur d'onde ou une structure interférentielle, de son gaufrage (34, 24) ; ou
le premier revêtement (36), qui est un revêtement d'augmentation de réflexion, et/ou le deuxième revêtement d'augmentation de réflexion (26) sont pourvus d'une première respectivement deuxième couche colorée transparente séparée.

12. Procédé selon l'une des revendications 1 à 11, **caractérisé en ce que** les zones de vernis (52) et les zones libres (54) sont conçues, au moins dans une souszone de la zone de surface, sous la forme d'une trame régulière ou irrégulière comprenant des éléments de trame et des espaces de trame, les dimensions des éléments de trame dans une direction latérale ou dans les deux directions latérales sont inférieures à 140 um, de préférence sont comprises entre 20 um et 100 um, en particulier entre 20 um et 60 um, la trame formée par les zones de vernis (52) et les zones libres (54) étant de préférence conçue avec un recouvrement de surface constant par les éléments de trame, qui est avantageusement compris entre 30 % et 70 %, de préférence entre 40 % et 60 %, en particulier d'environ 50 %.

13. Procédé selon l'une des revendications 1 à 12, **caractérisé en ce que** les zones de vernis (52) et les zones libres (54) sont conçues au moins dans une souszone de la zone de surface (20) comme une zone d'effet dans laquelle les zones de vernis et/ou les zones libres ont des dimensions latérales supérieures à 140 µm, de préférence au moins une zone de vernis (52) et/ou au moins une zone libre (54) ayant des dimensions latérales de plus de 250 µm, de préférence de plus de 500 µm et notamment de plus de 1 mm.

14. Procédé selon l'une des revendications 1 à 13, **caractérisé en ce que** les gaufrages (24, 34) de la structure combinée, qui sont pourvus de revêtements d'augmentation de réflexion (26, 36), forment des ensembles de micro-miroirs comprenant des micro-miroirs orientés, en particulier des miroirs plans, des miroirs concaves et/ou des miroirs de type Fresnel, les dimensions latérales des micro-miroirs étant avantageusement inférieures à 50 µm, de préférence inférieures à 20 µm, de manière particulièrement préférée inférieures à 10 µm.

15. Procédé selon l'une des revendications 1 à 14, **caractérisé en ce que** des marques distinctives en négatif transmissives (72,74) sont formées dans les zones de vernis (52) et/ou dans les zones libres (54) de la zone de surface réfléchissante (20), en particulier du fait que, dans les zones de vernis, des évidements congruents sont générés dans les premier et deuxième revêtements d'augmentation de réflexion et/ou, dans les zones libres, des évidements sont générés dans le deuxième revêtement d'augmentation de réflexion.
